**Europäisches Patentamt**

**European Patent Office**

**Office européen des brevets**

(11) Publication number : **0 381 824 B1**

(12) **EUROPEAN PATENT SPECIFICATION**

(45) Date of publication of patent specification :
01.04.92 Bulletin 92/14

(51) Int. Cl.⁵ : **G01F 23/14,** G05D 9/00,
**A47L 15/42**

(21) Application number : **89121248.2**

(22) Date of filing : **16.11.89**

(54) **Apparatus for preventing the accumulation of slags, in the prechamber of a pressure-switch.**

(30) Priority : **24.11.88 IT 8261388**

(43) Date of publication of application :
**16.08.90 Bulletin 90/33**

(45) Publication of the grant of the patent :
**01.04.92 Bulletin 92/14**

(84) Designated Contracting States :
**AT BE CH DE ES FR GB GR LI LU NL SE**

(56) References cited :
**FR-A- 2 449 432**
**GB-A- 1 267 737**
**US-A- 3 344 804**

(73) Proprietor : **S.A.E.T. di GIULIANO CENDRON**
**Via Giavera 28**
**I-31020 Fontane di Villorba (TV) (IT)**

(72) Inventor : **Cendron, Giuliano**
**Via Giavera 28**
**I-31020 Fontane di Villorba (TV) (IT)**

(74) Representative : **D'Agostini, Giovanni, Dr.**
**D'AGOSTINI ORGANIZZAZIONE n. 17 via**
**G.Giusti**
**I-33100 Udine (IT)**

Jouve, 18, rue Saint-Denis, 75001 PARIS

## Description

The present invention concerns an apparatus for preventing the accumulation of slags, particularly in the prechamber of a pressure-switch for auto-emptying device of liquids.

The invention finds particular and convenient even if not exclusive application, for utilization in liquid waste devices to be used in the electric-households, in the boats and the like .

Common auto-starting pumps for liquid wasting apparatuses are well known. In particular this kind of wasting pumps is used in dishwasher and in washing machines in general, this pumps being utilized also for discharging waste liquids and circulating or recirculating liquids, said pumps being utilized also in substitution or in addition of special siphons as disclosed in the Italian patent application IT-82515A/84 in the name of the same applicant. In general this liquid auto-emptying, already disclosed device, comprises an immersed pipe in the liquid to be evacuated, connected to a vacuum or pressing pump and further comprises a pressure-switch that is connected to a prechamber of compensation pressure in communication with the waste liquid container for waste liquid discharging which activates the actuation of the pressure-switch in conformity of the level of the waste liquid. The pressure-switch so activated operates the pump for wasting until the waste liquid in the prechamber, reach a pre-established level.

Drawbacks of this system concern the fact that in said pre-chamber different products and other different materials, as wood, sand, foils, papers, and the like associated to consistent soil as oily liquids, bituminous substances and like, are accumulated, the last ones realizing often one consistent layer that obstructs said prechamber preventing the correct actuation of the pressure-switch device for operating the evacuation.

The lacked or bad actuation causes liquid issue and other damages, this being particularly dangerous in the electric householders. The problem being more accentuated in open utilizations where more different wasting materials arrive in the wasting chamber.

GB-A-1267737 discloses a dishwashing or other washing machine, comprising a washing compartment, a pressure sensing device for a pressure-stat which controls the maximum permissible level of water fed to the washing compartment, the pressure sensing device comprising a prechamber 21 in in "T" way derived directly from a discharge conduit (13) from a washing compartment (12), a water delivery pipe connected to a washing and circulating pump communicating with the washing compartment, and a branch conduit (24) connected to the delivery pipe (19) at a position above said maximum water level, the branch conduit (24) opening:

– vertically (26) into the pressure-sensing device in a downward directed direction;

– in a jet compartment realized by a partition wall (28) in the interior of the pressure sensing device, that divides vertically the pressure sensing device in two parts: a downwards vertical jet compartment (28) and a pressure-stat prechamber (21) the aim being to produce a whirling motion in the water through in the pressure-sensing device during the delivery of water through said delivery pipe (19) to the washing compartment (10) and in the respective discharge conduit (13) and particularly in said pressure-stat prechamber (21) to obviate obstruction in pressure-stat pipe (22).

This solutions solves only one part of the problems raise above.

In fact the vertical flush the water injected inside and directly in the pressure sensing device causes a "splash" that raises changing in water leve inside it with possibility to obstruct by same soil deposited materials, the respective thermostat duct for control the operating of the machine, this causing frequently malfunction and maintenance.

Further che turbulence created in the pressure sensing device generate reflux into the discharging dutch that in this moment is close because the respective pump is not operating, so the soil material are refluxed upwards into the washing compartment with the consequence of further malfunction (In fact non efficient whirling action operates because the shape of the prechamber and the "U" direction of the jet from (28) that causes the soil to obstruct in the first splash the opening of the pressure-stat pipe (22) in said pressure-stat prechamber (21);

– injection of the water directly inside the pressure sensing device, causes variation in pressure and consequent possibility not desired insertion (switch-on) and disactivation (switch-off) of the respective pressureestat with alteration of the respective water washing level in the washing compartment;

– this function realizes a continue raising of the soil material an redeposit upwards, because during this action the the downwards discharging dutch is closed by the not operating discharging pump, so reflux have escape only in upwards direction.

Furthermore this solution is conceived only in connection with a discharge duct. Aim of the present invention is to obviate to the mentioned drawbacks .

This and others purposes are reached and the problem is solved with the present invention as claimed by a vertical pressure-stat prechamber apparatus for preventing the accumulation of slags and soil materials, particularly in the prechamber of a pressure-stat switch for auto-emptying device of liquids, enclosing pressure-stat switch in communication with a liquid-waste container by a collector, of the type comprising an under pressure pump input jet means, outputting into the interior of said prechamber to cause turbulence in it, characterized in that:

– said pressure-stat prechamber has a pressure air compensation prechamber;

– said pressure compensation prechamber has a substantially cylindrical shape and downwards curve horizontally opening by a collector in a waste container like a "smoking pipe";

– the input of said liquid jet in the prechamber (3) is realized by means of a pipe jet debouching into said collector in slightly tilted flow direction with respect to the collector, in order that jet is directed towards the prechamber curving upwards to reach the water surface of said air compensation prechamber in vertical whirling motion being obliged to return in counter-flow direction to the waste container (A).

The advantages of this solution is to realize a whirling going up and whirling going down perfect turbulence into the interior of said prechamber facilitating discharging of sediments end breaking obstructions of solids and other different materials, optimizing the actuation of the pressure-switch, avoiding lack of liquid.

Advantageously the respective jet cleaner in said jet pipe is operated in starting the discharging pump.

With this solution, variation in pressure is caused only during the discharging action and not during the re-circulation as disclosed in GB-A-1267737, avoiding consequently malfunction, being the respective device opening in the waste container and being not linked to washing dutch.

The cleaning ring circuit with the washing compartment realized in the GB-A-1267737 that causes the described inconveniences in the solution of this invention is completely avoided being the the prechamber completely closed, so injection in the direction of it, compress the compensation prechamber that at its turn reflux obliging the whirling jet to return in counter-flow direction in the waste container. In this way water pressure duct do not cause splash because the correspondent pressure increase in the air trap prechamber avoiding obstructions of the upper dutch to the respective upper pressure switch.

These and other advantages will appear from the successive specified description of a preferred solution of realization with the help of the included drawing which particulars of execution are not to be considered limitative but only exemplificative.

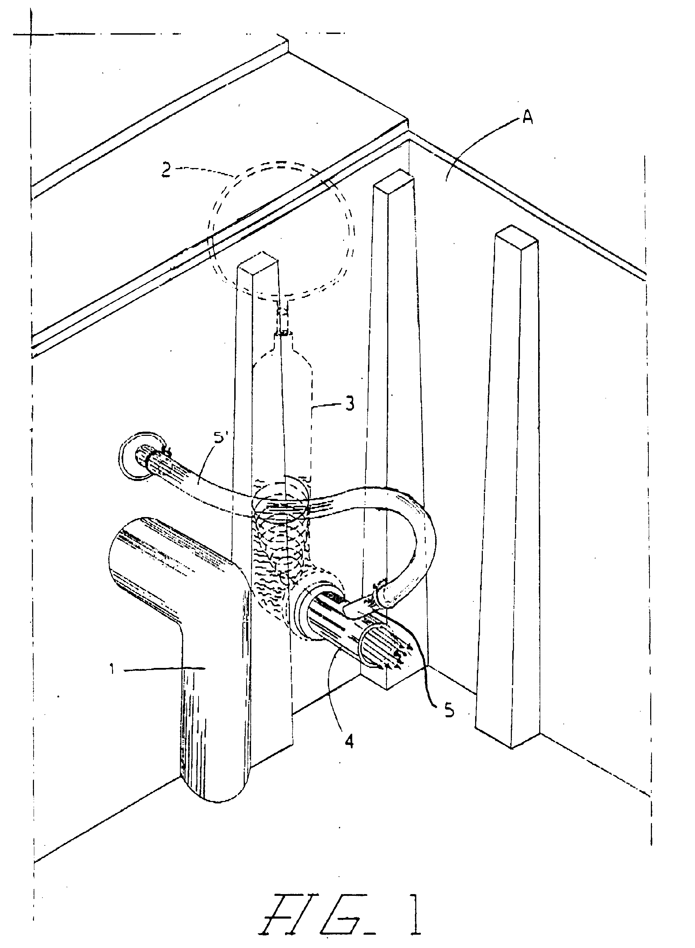

Figure 1 represents a perspective schematic view of an example of application of the method for an auto-emptying device in an evacuating discharging container for waste liquids.

Referring to the figure, in a wasting container for liquids (A) a pipe (1) for sucking the liquid by means of a pump is imputed.

The actuation of the pump is caused by a well known pressure-switch (2) provided in the lower part of a compensation prechamber (3) which is inferiorly in communication with the wasting container (A) by means of a collector (4).

Laterally to the said collector (4), between the input of the liquid and the prechamber (3) is disposed a small pipe (5) that outputs in the collector (4) towards the prechamber (3) in coflow inclined direction. In said small pipe (5) a small pipe (5′) is jointed, connected to a pump (not shown into the other side of the wall). Time to time a pressure jet of water is imputed by a pump end a small pipe (pipe), to the interior of the collector (4) causing a turbulence to the interior of the prechamber (3) and this causes the liquid with his sedimentation and slags and other impurities to return in the waste container via the collector (4). The created turbulence in the prechamber (3) assumes in particular a vortical motion interiorly of the said collector (4) by the jet of imputed water with the use of said small pipe (5). This jet of water causing turbulence in the prechamber, can be made manually operated when necessary or automatically. In the second solution the pressure-switch can activates the pump to produce said turbulence jet of water.

## Claims

1. A vertical pressure-stat prechamber apparatus for preventing the accumulation of slags and soil materials, particularly in the prechamber of a pressure-stat switch for auto-emptying device of liquids, enclosing pressure-stat switch (2) in communication with a liquid-waste container (1-A) by a collector (4), of the type comprising a under pressure pump input jet means, outputting into the interior of said prechamber to cause turbulence in it, characterized in that:

– said pressure-stat prechamber has a pressure air compensation prechamber (3);

– said pressure compensation prechamber has a substantially cylindrical shape (3) and downwards curve horizontally opening by a collector (4) in a waste container (A) like a "smoking pipe";

– the input of said liquid jet in the prechamber (3) is realized by means of a pipe jet (5,5′) debouching into said collector (4) in slightly tilted flow direction with respect to the collector, in order that jet is directed towards the prechamber (3) curving upwards to reach the water surface of said air compensation prechamber in vertical whirling motion being obliged to return in counter-flow direction to the waste container (A).

2. A device as claimed in claim 1 characterized in that said respective jet cleaner in said jet pipe (5,5′) is operated in starting the discharging pump.

EP 0 381 824 B1

## Patentansprüche

1. Ein vertikaler druckstabilisierter Vorkammerapparat zum Verhindern des Ansammelns von Schlacke und Erdmaterial, insbesondere in der Luftfalte eines Membranschalters für eine automatische Flüssigkeitsabsauganlage, mit einem Membranschalter (2), der durch einen Kollektor (4) mit einem Behälter für Abfallflüssigkeiten (1-A) in Verbindung steht, mit einer Unterdruck-Einpumpdüse, die in das Innere besagter Luftfalte mündet und dort Wirbel auslöst, gekennzeichnet dadurch, daß:

– besagte druckstabilisierte Vorkammer über eine Druckluftkompensationsvorkammer (3) verfügt;

– besagte Druckluftkompensationsvorkammer im wesentlichen zylinderförmig ist (3) und unten bogenförmig mit horizontaler Öffnung über einen Kollektor (4) in einen Abfallbehälter (A) nach Art einer "Pfeife";

– die Eingabe von besagter Flüssigkeitsdüse in die Vorkammer (3) mittels einer Rohrdüse (5, 5') geschieht, die in den genannten Behälter (4) mündet, in leicht geneigter Fließrichtung in bezug auf den Behälter, so daß die Düse auf die Vorkammer (3) gerichtet ist, in einer Aufwärtskurve, um die Wasseroberfläche der genannten Kompensationsvorkammer in vertikaler Wirbelbewegung zu erreichen und so gezwungen zu werden, in Gegenstromrichtung zu dem Abfallbehälter (A) zurückzufließen.

2. Eine Vorrichtung wie nach Anspruch 1, gekennzeichnet dadurch, daß besagte Reinigungsdüse in besagter Rohrdüse (5, 5') beim Anlassen der Absaugpumpe betätigt wird.

## Revendications

1. Un appareil pour éviter l'accumulation de détritus et de saletés dans la cloche à air d'un pressostat, en particulier dans la cloche à air d'un pressostat avec interrupteur pour un système automatique de vidange des liquides - où l'interrupteur du pressostat (2) est en communication avec un container qui contient les liquides usés (1-A) grâce à un collecteur (4) - du type comprenant un jet d'entrée par pompe sous pression, qui sort à l'intérieur de ladite cloche à air et provoque une turbulence dans celle-ci, caractérisé par le fait que:

– ladite cloche à air du pressostat a une cloche à air de pression compensatoire (3);

– ladite cloche de pression compensatoire est de forme à peu près cylindrique (3) avec le bas recourbé horizontalement comme une "pipe" et s'ouvrant par un collecteur dans un container de liquides usés (A);

– l'entrée dudit jet liquide dans la cloche à air (3) est effectué grâce à un jet sortant du tube (5,5) et débouchant dans ledit collecteur (4) avec un écoulement légèrement incliné par rapport au collecteur, de façon à ce que le jet soit dirigé vers la cloche à air (3) et remonte vers le haut pour rejoindre la surface de l'eau de ladite cloche à air compensatoire en un tourbillon vertical, étant ainsi obligé à revenir à contre courant dans le container (A).

2. Un dispositif selon la revendication 1 caractérisé par le fait que ledit jet nettoyant respectif dans ledit tube de ce jet (5, 5') fonctionne lorsque la pompe de débit se met en marche.

4

FIG. 1